Europäisches Patentamt

European Patent Office

Office européen des brevets

(11) Veröffentlichungsnummer: **0 383 975**
**A1**

# EUROPÄISCHE PATENTANMELDUNG

(21) Anmeldenummer: 89103146.0

(22) Anmeldetag: 23.02.89

(51) Int. Cl.5: **G08C 19/02, G01D 5/14**

(43) Veröffentlichungstag der Anmeldung:
**29.08.90 Patentblatt 90/35**

(84) Benannte Vertragsstaaten:
**AT BE CH DE ES FR GB GR IT LI LU NL SE**

(71) Anmelder: **CARL SCHENCK AG**
**Landwehrstrasse 55 Postfach 40 18**
**D-6100 Darmstadt(DE)**

(72) Erfinder: **Birnbaum, Erich, Dipl.-Ing.**
**Am Sandring 1**
**D-6231 Schwalbach(DE)**
Erfinder: **Milz, Udo, Dr.**
**Eichenweg 4**
**D-6110 Dieburg(DE)**

(74) Vertreter: **Brandt, Ernst-Ulrich**
**Fa. Carl Schenck AG Patentabteilung**
**Landwehrstrasse 55 Postfach 40 18**
**D-6100 Darmstadt 1(DE)**

(54) Verfahren zur elektrischen Messung insbesondere mechanischer Grössen und Einrichtung zur Durchführung des Verfahrens.

(57) Bei einem Verfahren zur elektrischen Messung insbesondere mechanischer Größen mit einer Trägerfrequenz-Meßeinrichtung, bei dem zur Verminderung von Störfeldeinflüssen die Trägerfrequenz störfeldabhängig gewählt wird, wird, um eine hinreichende Unterdrückung von Störfeldeinflüssen auch bei sich verändernden Störfrequenzen sicher zu gewährleisten, der Ausgang der Meßeinrichtung auf zumindest ein Störkriterium hin überwacht und die Trägerfrequenz in Abhängigkeit vom Überwachungsergebnis gewählt.

Fig. 1

**EP 0 383 975 A1**

## Verfahren zur elektrischen Messung insbesondere mechanischer Größen und Einrichtung zur Durchführung des Verfahrens

Die Erfindung betrifft ein Verfahren zur elektrischen Messung insbesondere mechanischer Größen mit einer Trägerfrequenz-Meßeinrichtung, bei dem zur Verminderung von Störfeldeinflüssen die Trägerfrequenz störfeldabhängig gewählt wird und eine Einrichtung zur elektrischen Messung insbesondere mechanischer Größen mit einer Trägerfrequenz-Meßeinrichtung, die im wesentlichen einen Trägerfrequenzgenerator, einen mit dem Trägerfrequenzgenerator verbindbaren Meßgrößenaufnehmer, einen Meßsignalverstärker, eine phasenempfindliche Gleichrichterschaltung und eine Tiefpaßfiltereinrichtung umfaßt.

Trägerfrequenz-Meßverfahren bzw. Trägerfrequenz-Meßeinrichtungen werden wegen der geringen Nullpunktsdrift und der Stabilität der Meßempfindlichkeit bei Temperaturänderungen sowie wegen der geringen Linearitätsabweichungen in weitem Umfang zur Messung insbesondere mechanischer Größen wie beispielsweise zur Messung von Wegen oder Kräften eingesetzt.

Ein Verfahren und eine Einrichtung der eingangs genann ten Art sind aus der Veröffentlichung "Meßtechnische Briefe 18 (1982), Seiten 42 bis 49 und Seiten 70 bis 73, Hottinger Baldwin Messtechnik" bekannt. Von einem Meßgrößenaufnehmer wird die mechanische Größe in ein elektrisches Meßsignal umgeformt und von einem Verstärker verstärkt. Der Frequenzbereich des Verstärkers ist so ausgelegt, daß nur die Trägerfrequenz durchgeleitet wird. Alle außerhalb der Bandbreite der Trägerfrequenz liegenden Störfrequenzen werden unterdrückt. Anschließend erfolgt eine phasenempfindliche Gleichrichtung, durch die das sinusförmige Trägerfrequenzsignal in eine Halbwellenkurve umgewandelt wird. Je nach Phasenlage gegenüber einer Referenzspannung entstehen positive oder negative Halbwellenkurven. Mit einer Tiefpaßfilterung werden die Amplituden des Trägerfrequenzsignals in geglättete Signale umgesetzt, die der zu messenden mechanischen Größe entsprechen; die jetzt nicht mehr erforderliche Trägerfrequenz wird abgesiebt. Da eingekop pelte Störsignale ohne Einfluß auf das Ausgangssignal bleiben, solange sie nicht in den relativ schmalen Übertragungsbereich der Meßeinrichtung fallen, wählt man als Trägerfrequenz Frequenzen, die der Grundfrequenz der Störgröße nicht entsprechen und die zwischen Oberwellen des Störsignals liegen, beispielsweise eine Trägerfrequenz von 225 Hz bei einer Netzfrequenz von 50 Hz. Ferner ist es bekannt, Trägerfrequenzen zu wählen, die so hoch liegen, daß alle Störfrequenzen bzw. Störfrequenzkomponenten ausreichend weit unterhalb der Trägerfrequenz liegen. In vielen Fällen kann die Trägerfrequenz wegen des Auftretens nachteiliger Effekte, wie z. B. Wirbelstromverluste und Temperaturverhalten, nicht ausreichend noch gewählt werden. Mit beiden Vorgehensweisen lassen sich Störfeldeinflüsse bei Meßvorgängen mit beliebigen, sich verändernden Störfrequenzen nicht unterdrücken, was zu Meßfehlern führt.

Aufgabe der Erfindung ist es, das Verfahren bzw. die Einrichtung der eingangs genannten Art so auszugestalten, daß unter Beibehaltung der vorteilhaften Eigenschaften eine hinreichende Verminderung von Störfeldeinflüssen auch bei sich verändernden Störfrequenzen sicher gewährleistet ist.

Erfindungsgemäß wird diese Aufgabe dadurch gelöst, daß der Ausgang der Meßeinrichtung auf zumindest ein Störkriterium hin überwacht wird und die Trägerfrequenz in Abhängigkeit vom Überwachungsergebnis gewählt wird.

Mit dem erfindungsgemäßen Verfahren ist es erstmals möglich, auch bei nicht vorherbestimmbar oder nicht meßtechnisch erfaßbar sich verändernden Störfrequenzen schnell und genau zu messen. Bei Vorliegen eines bestimmten Störkriteriums wird die Trägerfrequenz so gewählt, daß dann bei Überprüfung des Ausgangssignals das Störkriterium nicht erfüllt ist. Als zweckmäßig hat es sich erwiesen, Ausgangssignale bei einer vorgegebenen Trägerfrequenz auf die Größe des Störfeldeinflusses oder auf den Anteil des Störfeldeinflusses hin zu überwachen. Vorteilhaft ist es, periodisch die Größe des Störfeldeinflusses zu ermitteln.

Bei einer vorteilhaften Ausgestaltung des Verfahrens ist vorgesehen, daß in einer Meßphase das einen Meßgrößenanteil und einen Störgrößenanteil aufweisende Ausgangssignal und in einer anderen Meßphase das nur einen Störgrößenanteil aufweisende Ausgangssignal ermittelt wird und davon abhängig die Trägerfrequenz beibehalten oder eine andere Trägerfrequenz gewählt wird. Dabei kann in besonders einfacher Weise die Meßeinrichtung zum einen zur Ermittlung des mit einem Meßgrößenanteil und einem Störgrößenanteil behafteten Ausgangssignals, zum anderen zur Ermittlung des nur den Störfeldeinfluß wiedergebenden Ausgangssignals verwendet werden. Ferner kann vorgesehen sein, daß zumindest eines der Ausgangssignale gespeichert und gegebenenfalls mit dem anderen Ausgangssignal verglichen wird. Abhängig von der Größe der ermittelten Störung oder vom Ergebnis des Vergleichs wird die Trägerfrequenz beibehalten oder es wird eine oder werden mehrere weitere Trägerfrequenzen ausgewählt, bis im Ausgangssignal keine oder nur vernachlässigbare Störsignalanteile festgestellt werden. Erfindungsgemäß kann ferner vorgesehen werden, die im Störsignal vorliegenden Frequenzen zu ermitteln und das bei der Wahl der Trägerfrequenz zu berücksichtigen. Durch die wiederholten Überprüfungen kann selbst bei laufend sich ändernden Störfrequenzen genau gemessen werden, ohne daß auf hohe Trägerfrequenzen zurückgegriffen werden müßte.

Als zweckmäßig hat es sich erwiesen, die Trägerfrequenz in Stufen oder stufenlos zu wählen.

Die der Erfindung zugrundeliegende Aufgabe läßt sich mit einer Einrichtung zur elektrischen Messung insbesondere mechanischer Größen mit einer Trägerfrequenz-Meßeinrichtung, die im wesentlichen einen Trägerfrequenzgenerator, einen mit dem Trägerfrequenzgenerator verbindbaren Meßgrößenaufnehmer, einen Meßsignalverstärker, eine phasenempfindliche Gleichrichterschaltung und eine Tiefpaßfiltereinrichtung umfaßt, lösen, bei der erfindungsgemäß der Ausgang der Trägerfrequenz-Meßeinrichtung mit einem Detektor verbunden ist, der mit einer Steuerschaltung verbunden ist, über die der Trägerfrequenzgenerator steuerbar ist.

Der zur Überwachung des Ausgangs auf zumindest ein Störkriterium vorgesehene Detektor kann in besonders einfacher Weise als Schwellwertschalter ausgebildet sein.

Bei einer Einrichtung nach Anspruch 10 werden mit der Steuerschaltung die beiden Meßphasen definiert. Die Steuerschaltung bewirkt die Verbindung des Meßgrößenaufnehmers mit bzw. die Trennung von dem Trägerfrequenzgenerator. Über die Steuerschaltung wird auch die Speicherung des Ausgangssignals einer Meßphase bewirkt. Abhängig vom Ergebnis des im Schwellwertdetektor vorgenommenen Vergleichs erfolgt die Beibehaltung der Trägerfrequenz oder die Auswahl einer neuen Trägerfrequenz.

Die Erfindung wird im folgenden anhand der Zeichnungen näher erläutert.

Es zeigen:

Fig. 1: ein Blockschaltbild der erfindungsgemäßen Trägerfrequenz-Meßeinrichtung,

Fig. 2: eine schematische Darstellung von Frequenz-spektren zur Erläuterung verschiedener Verfahrensschritte.

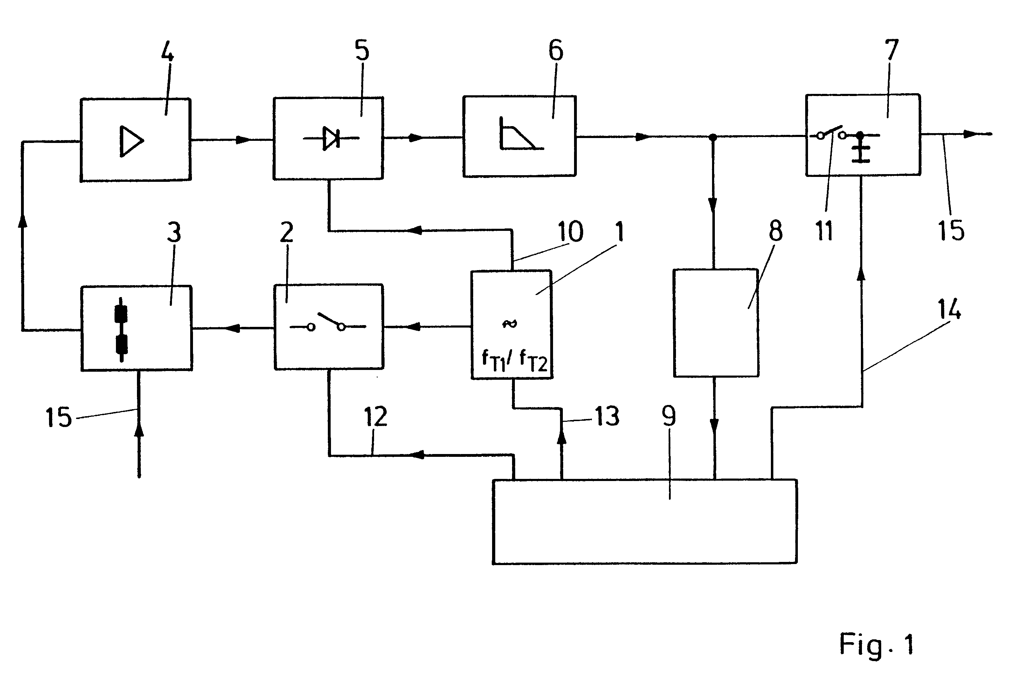

Die im Blockschaltbild in Fig. 1 dargestellte Meßeinrichtung weist einen Generator 1 zur Erzeugung von Trägerfrequenzen $f_T$ auf. Der Generator speist über eine steuerbare Schalteinrichtung 2 den Meßgrößenaufnehmer 3, der wie dargestellt als induktiver Wegaufnehmer ausgebildet sein kann. Das den Weg repräsentierende elektrische Signal am Ausgang des Aufnehmers 3 wird in einem Verstärker 4 verstärkt und einer phasenempfindlichen Gleichrichterschaltung 5 zugeführt, durch die das sinusförmige Trägerfrequenzsignal in eine Halbwellenkurve umgesetzt wird. Je nach Phasenlage gegenüber einer vom Generator 1 über eine Leitung 10 gelieferten Referenzspannung liegen am Ausgang der Gleichrichterschaltung 5 positive oder negative Halbwellenkurven an. Der Ausgang der Gleichrichterschaltung 5 ist mit dem Eingang einer Tiefpaßfiltereinrichtung 6 verbunden, an deren Ausgang ein geglättetes Ausgangssignal ansteht. Der Ausgang der Tiefpaßfiltereinrichtung 6, d. h. der Ausgang der Trägerfrequenz-Meßeinrichtung, ist mit dem Eingang einer Speichereinrichtung 7 verbunden, die eingangsseitig einen steuerbaren Schalter 11 aufweist. Der Ausgang der Tiefpaßfiltereinrichtung 6 und die Speichereinrichtung 7 sind ferner mit dem Eingang eines Detektors 8 verbunden. Der Detektor 8 ist ausgangsseitig mit einer Steuerschaltung 9 verbunden, die über Steuerleitungen 12, 13, 14 mit der Schalteinrichtung 2, dem Generator 1 sowie dem Schalter 11 der Speichereinrichtung 7 verbunden ist. Am Ausgang der Speichereinrichtung 7 steht ein Signal an, das im allgemeinen aufgrund von beispielsweise auf den Meßgrößenaufnehmer 3 einwirkenden Störfeldeinflüssen elektrischer oder magnetischer Art, wie durch den Pfeil 15 angedeutet, einen Meßgrößenanteil und einen Störgrößenanteil aufweist.

Die Messung erfolgt mit der Meßeinrichtung nach Fig. 1 periodisch in zwei Meßphasen, nämlich einer eigentlichen Meßphase, in der im Ausgangssignal hinter der Tiefpaßfiltereinrichtung 6 das Meßgrößensignal und ein Störgrößensignal vorliegen und einer weiteren Meßphase (Störmeßphase), in der als Ausgangssignal nur das Störgrößensignal vorliegt.

In der Meßphase erfolgt die Speisung des Meßgrößenaufnehmers 3 mit der Trägerfrequenz $f_{T1}$ über die von der Steuerschaltung 9 geschlossene Schalteinrichtung 2. Das Signal des Aufnehmers 3 wird anschließend verstärkt, gleichgerichtet und gefiltert. Im Ausgangssignal überlagern sich Meßsignal und Störsignal.

In der Störmeßphase wird von der Steuerschaltung 9 die Schalteinrichtung 2 offengehalten, so daß der Aufnehmer 3 nicht mit der Trägerfrequenz $f_{T1}$ versorgt wird. Gleichzeitig wird, gesteuert von der Steuerschaltung 9, das Ausgangssignal der vorangegangenen Meßphase in der Speichereinrichtung 7 weiterverarbeitbar zwischengespeichert; der Schalter 11 ist dazu am Ende der Meßphase von der Steuerschaltung 9 geöffnet worden. Die durch Störfelder hervorgerufenen Störgrößensignale sind jetzt allein wirksam und erreichen die weiter mit der Trägerfrequenz $f_{T1}$ gesteuerte, phasenempfindliche Gleichrichterschaltung 5 und die Tiefpaßfiltereinrichtung 6. Das am Ausgang der Tiefpaßfiltereinrichtung 6 jetzt allein anstehende Störsignal ist ein Maß für die Störung der Messung bei Verwendung der Trägerfrequenz $f_{T1}$.

Überschreitet das Störsignal einen Schwellwert, der im Detektor 8 voreinstellbar ist, so wird über die Steuerschaltung 9 die Trägerfrequenz $f_T$ des Generators 1 von der Frequenz $f_{T1}$ auf $f_{T2}$ umgeschaltet. Die Trägerfrequenz $f_{T2}$ wird so gewählt, daß sich eine ausreichende Störunterdrückung ergibt. Dies wird in nachfolgenden Meßphasen/Störmeßphasen überprüft. Es können gegebenenfalls mehrere Zyklen von Meßphasen/Störmeßphasen mit Einstellung unterschiedlicher Trägerfrequenzen $f_T$ erforderlich sein, um eine ausreichende Störunterdrückung sicherzustellen.

Meßphasen/Störmeßphasen wiederholen sich mit den von der Steuerschaltung 9 bestimmten Perioden, so daß in der Meßeinrichtung zur Vermeidung von Meßfehlern laufend eine Berücksichtigung von Störfeldern mit sich verändernden Störfrequenzen stattfindet.

Am Anschluß 15 hinter der Speichereinrichtung 7 liegt während der Meßphase und der anschließenden Störmeßphase das Signal an, das sich aus Meßsignal und Störsignal zusammensetzt. Erfindungsgemäß kann vorgesehen werden, daß ein um das ermittelte Störsignal bereinigtes Meßsignal am Anschluß 15 ansteht.

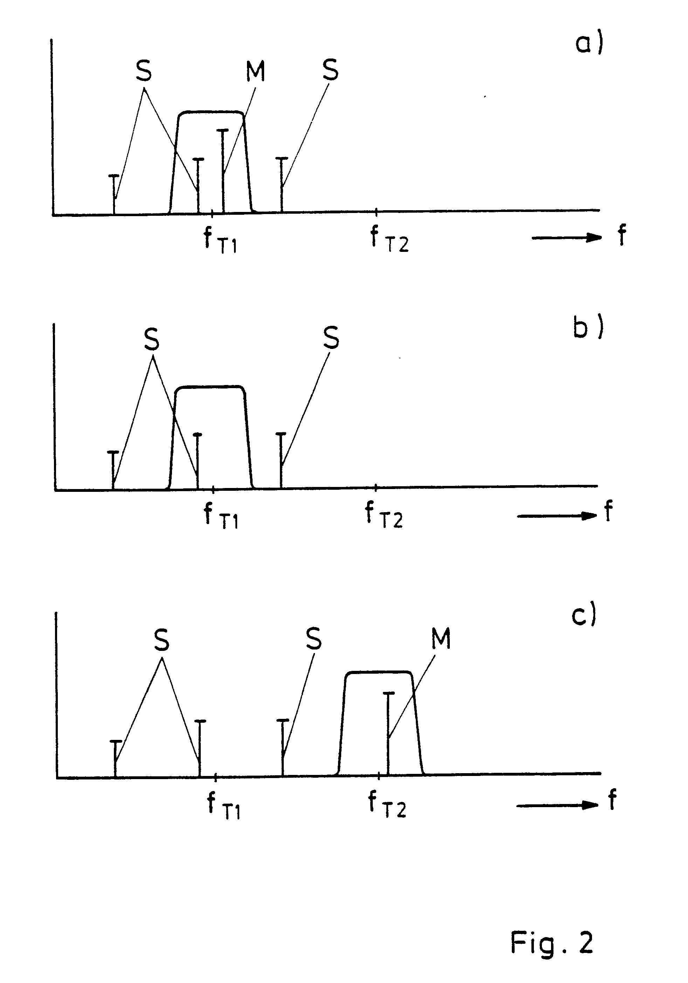

Anhand der Fig. 2 wird das Verfahren weiter verdeutlicht. Fig. 2a zeigt eine Messung mit der Trägerfrequenz $f_{T1}$. Das Störfeld weist Frequenzen S auf, von denen eine neben der Meßgrößenfrequenz M im Bandpaßbereich der Trägerfrequenz-Meßeinrichtung liegt, was zu Meßfehlern führt. Fig. 2b zeigt eine Messung während der Störmeßphase bei abgeschalteter Trägerfrequenz $f_{T1}$; das Meßgrößensignal liegt nicht vor. Die Störung, die im Bandpaßbereich liegt, wird nun mit Hilfe des Detektors ausgewertet. Fig. 2c zeigt eine Messung bei einer geänderten Trägerfrequenz $f_{T2}$, wobei $f_{T2}$ größer als $f_{T1}$ ist. Die Frequenzen S der Störung liegen nunmehr alle außerhalb des Bandpaßbereichs und wirken sich nicht mehr aus.

Durch die periodische Überprüfung ist sichergestellt, daß frequenzveränderliche Störungen bei der Messung berücksichtigt werden.

**Ansprüche**

1. Verfahren zur elektrischen Messung insbesondere mechanischer Größen mit einer Trägerfrequenz-Meßeinrichtung, bei dem zur Verminderung von Störfeldeinflüssen die Trägerfrequenz störfeldabhängig gewählt wird, dadurch gekennzeichnet, daß der Ausgang der Meßeinrichtung auf zumindest ein Störkriterium hin überwacht wird und die Trägerfrequenz in Abhängigkeit vom Überwachungsergebnis gewählt wird.

2. Verfahren nach Anspruch 1, dadurch gekennzeichnet, daß ein am Ausgang anstehendes Signal bei einer vorgegebenen Trägerfrequenz auf die Größe eines Störfeldeinflusses hin überwacht wird.

3. Verfahren nach Anspruch 1, dadurch gekennzeichnet, daß ein am Ausgang anstehendes Signal bei einer vorgegebenen Trägerfrequenz auf den Anteil eines Störfeldeinflusses hin überwacht wird.

4. Verfahren nach einem oder mehreren der vorhergehenden Ansprüche, dadurch gekennzeichnet, daß die Größe des Störfeldeinflusses periodisch ermittelt wird

5. Verfahren nach Anspruch 4, dadurch gekennzeichnet, daß in einer Meßphase das einen Meßgrößenanteil und einen Störgrößenanteil aufweisende Ausgangssignal und in einer anderen Meßphase das nur einen Störgrößenanteil aufweisende Ausgangssignal ermittelt wird, und daß davon abhängig die Trägerfrequenz beibehalten oder eine andere Trägerfrequenz gewählt wird.

6. Verfahren nach Anspruch 5, dadurch gekennzeichnet, daß die Ausgangssignale der beiden Meßphasen in Beziehung zueinander gesetzt werden und daß davon abhängig die Trägerfrequenz beibehalten oder eine andere Trägerfrequenz gewählt wird.

7. Verfahren nach einem oder mehreren der vorhergehenden Ansprüche, dadurch gekennzeichnet, daß die Trägerfrequenz in Stufen oder stufenlos wählbar ist.

8. Einrichtung zur elektrischen Messung insbesondere mechanischer Größen mit einer Trägerfrequenz-Meßeinrichtung, die im wesentlichen einen Trägerfrequenzgenerator (1), einen mit dem Trägerfrequenzgenerator (1) verbindbaren Meßgrößenaufnehmer (3), einen Meßsignalverstärker (4), eine phasenempfindliche Gleichrichterschaltung (5) und eine Tiefpaßfiltereinrichtung (6) umfaßt, dadurch gekennzeichnet, daß der Ausgang der Trägerfrequenz-Meßeinrichtung mit einem Detektor (8) verbunden ist, der mit einer Steuerschaltung (9) verbunden ist, über die der Trägerfrequenzgenerator (1) steuerbar ist.

9. Einrichtung nach Anspruch 8, dadurch gekennzeichnet, daß der Detektor (8) als Schwellwertschalter ausgebildet ist.

10. Einrichtung nach Anspruch 8 und/oder Anspruch 9, dadurch gekennzeichnet, daß eine mit der Steuerschaltung (9) verbundene Schalteinrichtung (2) zwischen Meßgrößenaufnehmer (3) und Trägerfrequenzgenerator (1) vorgesehen ist.

11. Einrichtung nach Anspruch 10, dadurch gekennzeichnet, daß eine mit der Steuerschaltung (9) und dem Detektor (8) verbundene Speichereinrichtung (7) für Ausgangssignale der Trägerfrequenz-Meßeinrichtung vorgesehen ist.

Fig. 1

EP 0 383 975 A1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | MESSTECHNISCHE BRIEFE, Band 18, Hefte 2/3, 1982, Seiten 42-49,70-73, Darmstadt, DE; E. HERINGHAUS: "Trägerfrequenz- und Gleichspannungs-Messverstärker für das Messen mechanischer Grössen - ein Systemvergleich aus anwendungstechnischer Sicht. Teil 1: Arbeitsweisen und Vergleich charakteristischer Eigenschaften" * Der ganze Artikel * | 1,8 | G 08 C 19/02<br>G 01 D 5/14 |
| A | DE-A-2 447 007 (CARL SCHENCK) * Das ganze Dokument * | 1,8 | |
| A | DE-A-2 657 793 (HOTTINGER BALDWIN MESSTECHNIK) * Das ganze Dokument * | 1,8 | |
| A | DE-A-2 113 536 (HERRMANN) | | |

|  | RECHERCHIERTE SACHGEBIETE (Int. Cl.5) |
|---|---|
| | G 01 D<br>G 08 C |

Der vorliegende Recherchenbericht wurde für alle Patentansprüche erstellt

| Recherchenort | Abschlußdatum der Recherche | Prüfer |
|---|---|---|
| DEN HAAG | 26-09-1989 | WANZEELE R.J. |

EPO FORM 1503 03.82 (P0403)